# EUROPEAN PATENT APPLICATION

(11) **EP 2 244 503 A1**
(43) Date of publication of application: **27.10.2010**
(21) Application number: 09360022.9
(22) Date of filing: 23.04.2009
(51) Int. Cl.: H04W 36/08, H04W 84/04

(54) **Handover control**

(71) Applicant: Alcatel Lucent, 75008 Paris (FR)
(72) Inventor: Bradley, Nigel L, Cricklade SN6 6LT (GB); Brend, Graham, Bath BA1 7UE (GB); Putman, Anthony Edward, Chippenham, Wiltshire SN15 5AQ (GB); Sapiano, Philip Charles, Corsham, Wiltshire SN13 9AY (GB); Cassuto, Philippe S, 92200 Nueilly-sur-Seine (FR); Skeates, Mark, Bath BA1 4PA (GB)
(74) Representative: Leppard, Andrew John

(57) **Abstract**

Methods for facilitating handover of user equipment between a macro base station and a femto base station of a wireless communications network, a macro base station, a femto gateway and computer program products are disclosed. The method of encoding information in a handover control message to facilitate handover of user equipment between a macro base station and a femto base station of a wireless communications network comprises the steps of: predefining handover identifier values to be utilised by said macro base station when generating said handover control message, each handover identifier value encoding an identifying characteristic of a femto base station within a macro cell supported by said macro base station and encoding an identifying characteristic of said macro base station; in response to a measurement report message received at said macro base station indicating a measured identifying characteristic of a target femto base station identified by said user equipment as a handover candidate, identifying a corresponding handover identifier value encoding said measured identifying characteristic of said target femto base station; and utilising said corresponding handover identifier value within a target cell identifier information element of said handover control message. By encoding the identifier value within the target cell identifier information element, existing handover control messages may be used without needing to make any protocol adjustments. The information may be readily encoded within this existing information element, and because the handover identifier value is encoded within this information element it can be ensured that this information is fully communicated throughout the network since the onward transmission of this information element is specified as mandatory. Accordingly, it can be seen that the information needed to be communicated to enable more efficient handover to occur can readily be provided within existing messages and the information provided within that message will be received by the equipment which needs to initiate handover.

## Description

### FIELD OF THE INVENTION

The present invention relates to methods for facilitating handover of user equipment between a macro base station and a femto base station of a wireless communications network, a macro base station, a femto gateway and computer program products.

### BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within a macro cell. Such smaller sized cells are sometimes referred to as micro cells, pico cells or femto cells. One way to establish a femto cell is to provide a femto base station that provides coverage having a relatively limited range within the coverage area of a macro cell. The transmission power of a femto base station is relatively low and, hence, each femto cell provides a small coverage area compared to that of a macro cell and covers, for example, an office or a home.

Such femto cells are typically provided where the communications coverage provided by the macro cell is poor or where a user wishes to use an alternative communications link provided locally, by the femto base station, to communicate with the core network. Such a situation might arise where, for example, where a user has a pre-existing communications link and the user wishes to utilise that link in preference to that provided by a macro cell network provider to communicate with the core network.

To enable user equipment to communicate with the femto base station it may be necessary to handover the user equipment from the macro cell from within which it is located to a femto base station. However, there are typically tens of thousands of femto base stations which may be deployed within a network under one controller. This presents a problem of identifying which femto base station to handover to.

Accordingly, it is desired to provide an improved technique to enable handover to occur.

### SUMMARY

According to a first aspect of the present invention there is provided a method of encoding information in a handover control message to facilitate handover of user equipment between a macro base station and a femto base station of a wireless communications network, the method comprising the steps of: predefining handover identifier values to be utilised by the macro base station when generating the handover control message, each handover identifier value encoding an identifying characteristic of a femto base station within a macro cell supported by the macro base station and encoding an identifying characteristic of the macro base station; in response to a measurement report message received at the macro base station indicating a measured identifying characteristic of a target femto base station identified by the user equipment as a handover candidate, identifying a corresponding handover identifier value encoding the measured identifying characteristic of the target femto base station; and utilising the corresponding handover identifier value within a target cell identifier information element of the handover control message.

The first aspect recognises that one problem with the deployment of femto cells is that the number of primary scrambling codes which can be allocated to femto base stations is limited and, typically, will be between 6 and 16 different available primary scrambling codes. The selection of a primary scrambling code will typically be auto-configured by the femto base stations themselves based on measurements of other primary scrambling codes used in their vicinity. Therefore, in a typical femto cell deployment, these primary scrambling codes will need to be heavily reused and this presents a problem for the handover of a call from the macro base station to a femto base station as will now be explained in more detail. As user equipment within a macro cell notices that the quality of its signal is degraded, the user equipment will generate a measurement report indicating that a neighbouring femto base station provides a much better quality signal and is a potential handover target candidate. The macro base station will therefore need to attempt to communicate with the target femto base station via the core network to indicate that handover is required. The measurement report includes a distinguishing characteristic of the target femto base station to help identify it. However, it is likely that as the number of femto base stations increases, the number of femto base stations having the same distinguishing characteristics increases, each of which would need to be prepared for handover. One way of addressing this and effecting a handover would be to utilise this characteristic of the target femto base station, together with a characteristic of the macro base station. If these characteristics are encoded, then it will be possible for the femto network to reduce the number of possible candidate target femto base stations which may be needed to be prepared for the handover. Accordingly, a number of possible handover identifier values are predefined, each of which encode a different possible expected identifying characteristic of femto base stations within the macro cell supported by that macro base station, together with an identifying characteristic of that macro base station. When a measurement report is received at the macro base station which provides a measured identifying characteristic of a femto base station identified by the user equipment as a possible handover target, the corresponding handover identifier value which encodes that measured characteristic of the target base station as well as encoding the identifying characteristic of the macro base station is selected. This selected handover identifier value is then placed within a target cell identifier information element of the handover control message. In this way, characteristics of the target femto base station and the macro base station supporting the macro cell within which the femto base station resides is encoded in a handover control message. Furthermore, by encoding the identifier value within the target cell identifier information element, existing handover control messages may be used without needing to make any protocol adjustments. The information may be readily encoded within this existing information element, and because the handover identifier value is encoded within this information element it can be ensured that this information is fully communicated throughout the network since the onward transmission of this information element is specified within the relevant standard's specification as mandatory. Accordingly, it can be seen that the information needed to be communicated to enable more efficient handover to occur can readily be provided within existing messages and the information provided within that message will be received by the equipment which needs to initiate handover.

In one embodiment, the target cell identifier information element comprises a radio network controller identifier portion identifying a femto gateway and a cell identifier portion comprising the corresponding handover identifier value. Accordingly, the information element includes an indicator which identifies the identity of the femto gateway which will initiate handover with the appropriate femto base station.

In one embodiment, the target cell identifier information element comprises an 'n'-bit number, the radio network controller identifier portion comprises an 'm'-bit number and the cell identifier portion comprises 'p'-bits allocated for the identifying characteristic of the femto base station concatenated with 'q'-bits allocated for identifying characteristic of the macro base station, where 'p' + 'q' + 'm' is less than or equal to 'n'. Accordingly, the identifying characteristics of both the target femto base station and the macro base station can be included within the existing number of bits currently specified for the information element, with the 'm'-bit number identifying the femto gateway. In this way, it can be seen that the information may be included without having to change any protocol or standards relating to this information element.

In one embodiment, the target cell identifier information element comprises a 28-bit number, the cell identifier portion comprises 16-bits and the corresponding handover identifier value comprises at least 3-bits allocated for the identifying characteristic of the femto base station concatenated with 'p'-bits allocated for the identifying characteristic of the macro base station, where 3 +'p' is less than or equal to 16. Accordingly, the identifying characteristics of the target femto base station and the macro base station may be included within an existing 16-bit portion of the information element.

In one embodiment, the identifying characteristic of the macro base station comprise at least one of an indication of a macro cell identifier, an indication of macro cell frequency and an indication of a macro base station colour code. It will be appreciated that in a second generation (2G) implementation a frequency identifier, macro base station colour code and a cell identifier are available as possible identifiers, portions of which may be used to help provide a unique identifier for that macro cell. In a third generation (3G) implementation, a radio network controller identifier may also be available. In addition, for both 2G and 3G networks, a local area code, routing area code (RAC) and a public switched telephone network identifier (PLMN ID) may also be utilised.

In one embodiment, the identifying characteristic of the macro base station comprises a macro primary scrambling code indicator. Accordingly, the identifier may be an indication of the primary scrambling code used by the macro base station. It will be appreciated that in most networks the extent of reuse of such a macro base station primary scrambling code will be limited. Therefore, the number of matching macro base stations identified in this way is likely to be low. Also, the determination of such primary scrambling codes is functionality normally already provided by elements of the network.

In one embodiment, the identifying characteristic of the macro base station comprises a virtual cell identifier associated with that macro base station. Accordingly, individual macro base stations may be centrally provisioned and given an identifier in the form of a virtual cell identifier for that macro base station. This also helps to reduce the probability of more than one macro base station having the same identifier.

In one embodiment, a first set of virtual cell identifiers indicates that the target femto base station is an open access femto base station and a second set of at least one virtual cell identifier indicates that the target femto base station is a closed access femto base station. It will be appreciated that a closed access femto base station will only allow access to those user equipment who have been indicated (for example using the user equipment's IMSI) as being registered with that femto base station, whereas an open access femto base station allows access to all user equipment. Accordingly, those femto base stations which are open access may be provisioned with a virtual cell identifier associated with the macro base station, whereas for those femto base stations which are closed access, a particular set of virtual cell identifiers, such as a single virtual cell identifier may be utilised throughout the network. In this way, any femto base station which is closed access will have the same single (or from the same small subset) virtual cell identifier since, for closed access femto base stations, it is possible to reduce the number of likely target femto base stations using the information regarding those user equipment which are registered with those closed access femto base stations.

In one embodiment, the identifying characteristic of the femto base station comprises a femto primary scrambling code identifier. Accordingly, the primary scrambling code of the femto base station may be used to identify the target femto base station. It will be appreciated that in a 3G implementation, the primary scrambling code of the target femto base station will be reported by the user equipment automatically when the signal from the macro base station degrades and the primary scrambling code of the target femto base station will be already reported in the user equipment's measurement report to the macro base station. This, therefore, provides a convenient technique for identifying a characteristic of the femto base station.

In one embodiment, a first set of the femto primary scrambling code identifiers indicates that the target femto base station is an open access femto base station allowing incoming handover and a second set of the femto primary scrambling code identifiers indicates that the target femto base station is a closed access femto base station. Accordingly, those femto base stations which are open access (i.e. any user equipment may have access) may be provisioned to only select from a subset of the available primary scrambling codes, whereas those which are closed access (i.e, only registered user equipment may have access) may be provision to select from a different subset of the available primary scrambling codes. In this way, it can be seen that open access and closed access femto base station can readily be identified from their primary scrambling codes. The appropriate virtual cell identifier can then be provided depending on the access arrangements of the femto base station.

In one embodiment, the method comprises the step of including a user equipment identifier in the handover control message. Accordingly, the user equipment identifier such as, for example, its International Mobile Subscriber Identity (IMSI) may be provided in the handover control message in order to uniquely identify the user equipment requesting handover, this information then being useable when decoding the message since only those possible target femto base stations which have registered that IMSI are possible handover targets.

In one embodiment, the target cell identifier information element is provided within a source radio network controller to target radio network controller transparent container of the handover control message. It will be appreciated that such a container is defined in 3GPP TS 25.413.

According to a second aspect of the present invention there is provided a macro base station operable to encode information in a handover control message to facilitate handover of user equipment between the macro base station and a femto base station of a wireless communications network, the macro base station comprising: storage operable to store predefined handover identifier values to be utilised when generating the handover control message, each handover identifier value encoding an identifying characteristic of a femto base station within a macro cell supported by the macro base station and encoding an identifying characteristic of the macro base station; identifying logic operable, in response to a measurement report message received indicating a measured identifying characteristic of a target femto base station identified by the user equipment as a handover candidate, to identify a corresponding handover identifier value encoding the measured identifying characteristic of the target femto base station; and message generation logic operable to utilise the corresponding handover identifier value within a target cell identifier information element of the handover control message.

In one embodiment, the target cell identifier information element comprises an 'n'-bit number, the radio network controller identifier portion comprises an 'm'-bit number and the cell identifier portion comprises 'p'-bits allocated for the identifying characteristic of the femto base station concatenated with 'q'-bits allocated for identifying characteristic of the macro base station, where 'p' + 'q' + 'm' is less than or equal to 'n'.

In one embodiment, the identifying characteristic of the macro base station comprise at least one of an indication of a macro cell identifier, an indication of macro cell frequency and an indication of a macro base station colour code.

In one embodiment, the identifying characteristic of the macro base station comprises a macro primary scrambling code indicator.

In one embodiment, the identifying characteristic of the macro base station comprises a virtual cell identifier associated with that macro base station.

In one embodiment, a first set of virtual cell identifiers indicates that the target femto base station is an open access femto base station and a second set of at least one virtual cell identifier indicates that the target femto base station is a closed access femto base station.

In one embodiment, the identifying characteristic of the femto base station comprises a femto primary scrambling code identifier.

In one embodiment, a first set of the femto primary scrambling code identifiers indicates that the target femto base station is an open access femto base station and a second set of the femto primary scrambling code identifiers indicates that the target femto base station is a closed access femto base station.

In one embodiment, the message generation logic is operable to include a user equipment identifier in the handover control message.

In one embodiment, the target cell identifier information element is provided within a source radio network controller to target radio network controller transparent container of the handover control message.

According to a third aspect of the present invention, there is provided a method of decoding information in a handover control message to facilitate handover of user equipment between a macro base station and a femto base station of a wireless communications network, the method comprising the steps of: associating a femto base station identifier with an identifying characteristic of a femto base station within a macro cell and an identifying characteristic of a macro base station supporting the macro cell; receiving a handover identifier value within a target cell identifier information element of the handover control message, the handover identifier value encoding an identifying characteristic of a femto base station within a macro cell supported by a macro base station and an identifying characteristic of that macro base station; initiating handover with those femto base stations whose identifier is associated with the identifying characteristic of the femto base station and the identifying characteristic of the macro base station encoded within the handover identifier value.

Accordingly, different femto base station identifiers are associated with characteristics of both that femto base station and the macro base station supporting the macro cell within which that femto base station is located. This helps to distinctly identify the femto base station. On receipt of a handover control message, the handover identifier value within a target cell identifier information element is examined to establish the characteristics of the target femto base station identified by the user equipment and characteristics of the macro base station which received the measurement report indicating the target femto base station. This information is discernable from the target cell identifier information element without needing to redefine that information element or change any standards or protocols to enable that information to be transmitted. Also, because the target cell identifier information element carries that handover identifier value, it can be ensured that the information reaches that part of the network which can initiate handover since onward transmission of that information is specified within the relevant standard's specifications as being mandatory. Accordingly, handover is initiated with those femto base stations whose identifier is associated with the characteristics encoded in the target cell identifier information element.

In one embodiment, the step of associating comprises: associating the femto base station identifier with the identifying characteristic of the femto base station within more than one macro cell and an identifying characteristic of a macro base station supporting those macro cells. Accordingly, those femto base stations which may be in a region where coverage is provided by more than one macro cell may be associated with all of those macro cells within which the femto base station is located. Without this additional information, the likelihood of a successful handover occurring would be reduced since the user equipment may be currently supported by any one of the macro cells covering that target femto base station.

In one embodiment, the step of associating comprises: associating the femto base station identifier with the identifying characteristics in response to a reporting message from that femto base station including the identifying characteristics. Accordingly, the association of femto base stations with the identifying characteristics of those femto base stations and their neighbouring macro base stations may be built up from reporting messages received from the femto base stations distributed throughout the network. Such reporting messages may be transmitted by the femto base stations on initialisation or as result of periodic reporting to identify changes in the network.

According to a fourth aspect of the present invention, there is provided a femto gateway operable to decode information in a handover control message to facilitate handover of user equipment between a macro base station and a femto base station of a wireless communications network, the femto gateway comprising: storage logic operable to associate a femto base station identifier with an identifying characteristic of a femto base station within a macro cell and an identifying characteristic of a macro base station supporting the macro cell; reception logic operable to receive a handover identifier value within a target cell identifier information element of the handover control message, the handover identifier value encoding an identifying characteristic of a femto base station within a macro cell supported by a macro base station and an identifying characteristic of that macro base station; handover initiation logic operable to initiate handover with those femto base stations whose identifier is associated with the identifying characteristic of the femto base station and the identifying characteristic of the macro base station encoded within the handover identifier value.

According to a fifth aspect of the present invention, there is provided a computer program product operable, when executed on a computer, to perform the method steps of the first aspect.

According to a sixth aspect of the present invention, there is provided a computer program product operable, when executed on a computer, to perform the method of the third aspect.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a telecommunications network according to one embodiment;
Figure 2 illustrates a general femto cell deployment within one macro cell shown in Figure 1;
Figure 3 is a flowchart showing schematically the main processing steps for facilitating handover;
Figures 4A, 4B and 4C show schematically the encoded contents of a target cell identifier information element of the handover control messages according to embodiments;
Figure 5 illustrates an interaction between components of the wireless communication network when facilitating a handover according to one embodiment; and
Figure 6 illustrates the interaction between components of the wireless communication network when facilitating handover according to another embodiment.

### DESCRIPTION OF THE EMBODIMENTS

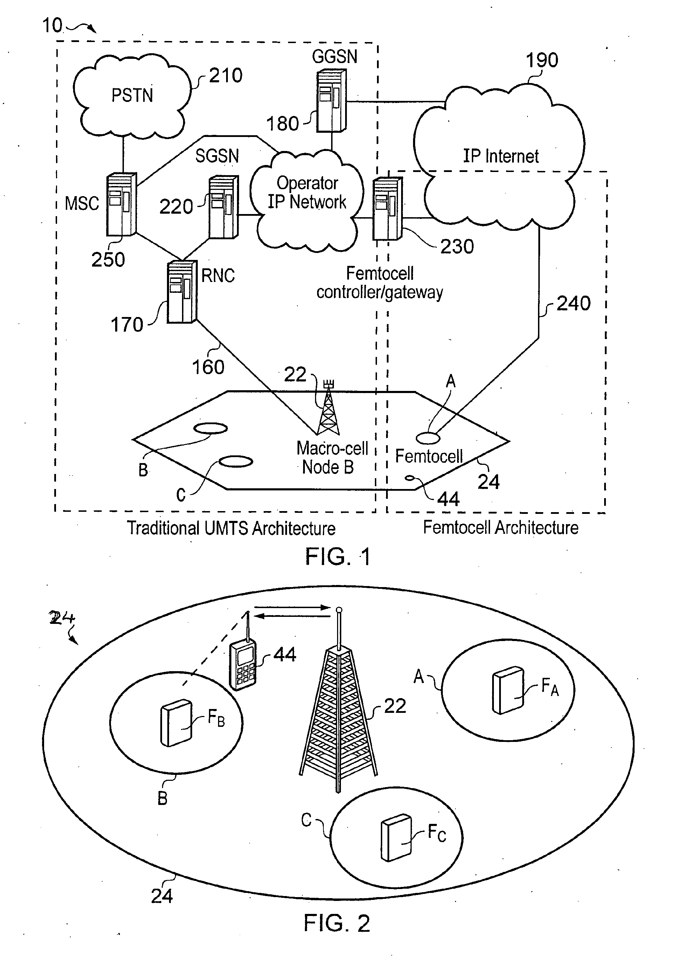

Figure 1 illustrates a wireless communication network, generally 10, according to one embodiment. User equipment 44 roam through the wireless communication network 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by a radio network controller 170. The radio network controller 170 controls the operation of the wireless communications network 10 by communicating with the base stations 22 over a backhaul communications link 160. The network controller 170 also communicates with the user equipment 44 via their respective radio links in order to efficiently manage the wireless communication network 10.

The radio network controller 170 maintains a neighbour list which includes information about the geographical relationship between cells supported by base stations. In addition, the radio network controller 170 maintains location information which provides information on the location of the user equipment within the wireless communications network 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with serving general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station F_{A} to F_{C} communicates via a femto cell controller/gateway 230. A handover or camping event is initiated between the base station 22 and the femto cell base stations F_{A} to F_{C} when the user equipment provides a measurement report to the macro base station which indicates that the femto base stations F_{A} to F_{C} are within range. The femto cell base stations F_{A} to F_{C} typically utilise the user's broadband Internet connection 240 (such as ADSL, Cable, Ethernet, etc.) as a backhaul.

Femto cell base stations F_{A} to F_{C} are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{C} are provided locally by customers. Such femto cell base stations F_{A} to F_{C} provide local coverage in areas of the macro network where quality of service may be low. Hence, the femto cell base stations F_{A} to F_{C} provide for improved quality of service in areas which are difficult for network operators. To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

The number of primary scrambling codes which can be allocated to a femto base station is limited. In many implementations, the number of available primary scrambling codes will be less than 20 and most typically will be between 6 and 16. However, the total number of available primary scrambling codes will vary from implementation to implementation and may be more or less than these illustrative numbers. These primary scrambling codes are auto-configured by the femto base stations based on measurements of surrounding primary scrambling codes used. Therefore, in typical femto base station deployments, the primary scrambling codes may need to be heavily reused which means that many femto base stations may be using the same primary scrambling code within a macro cell coverage area.

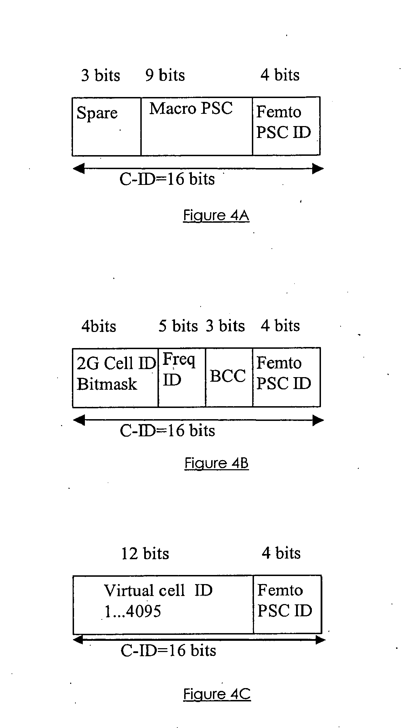

Before describing the embodiments in any more detail, a brief overview will now be provided. When performing a handover from a macro base station to a femto base station, it is necessary to try to identify the target femto base station as accurately as possible. In an ideal implementation, each femto base station may be uniquely identified. However, even if it were possible to unique identify every femto base station deployed in the network, currently no provision exists to enable user equipment to detect such unique identification or to communicate that through the network back to the femto controller/gateway 230 (which acts as the radio network controller for the femto base stations) to enable the handover to occur. Accordingly, the existing functionality of the user equipment, macro base station and intervening infrastructure to the femto controller/gateway 230 needs to be utilised in a way which enables the target femto base station to be identified. Various existing functionality exists in both 2G and 3G networks which can be exploited to help identify and facilitate handover to a target femto base station. Such identifying is achieved by encoding characteristics of the target femto base station measured by the user equipment, together with characteristics of the macro base station which currently supports the user equipment in order to narrow down possible matching target femto base stations within the network to a manageable number. However, the amount of available space within existing messages which can be guaranteed to reach the femto controller/gateway 230 is limited and so the amount of information used to characterise the femto base station and the macro base station is also limited which may mean that more than one possible femto base station target candidate is identified. However, this is preferable to no narrowing down occurring or every femto base station within a macro cell being identified and prepared as a potential candidate. Hence, the information encoded will depend on the measurement capabilities within the network and the available space within the handover control message. For example, as will be explained in more detail with reference to Figures 4A to 4C below, in a 3G implementation, the user equipment is operable to measure the primary scrambling code of a target femto base station and already provides this in a measurement report. Accordingly, in such a network, the information encoded in the message will include the femto base station primary scrambling code and the macro cell primary scrambling code, together with possibly other items of information to help narrow the likely matches. Likewise, in a 2G implementation, the user equipment is also able to report the primary scrambling code of the femto base station, but a portion of the cell ID is utilised in conjunction with a frequency identifier for the macro cell and the base station colour code in order to further narrow the possible matches. This information is then correlated in the femto controller/gateway 230 with similar characteristic data which has been measured and provided by the deployed femto base stations and stored in the femto controller/gateway 230. When the handover control message is received by the femto controller/gateway 230, it checks for correlation between the characteristics identified in the handover control message and those characteristics measured by femto base stations. When a match occurs, that femto base station is a possible handover candidate and handover with that femto base is initiated. In this way, it can be seen that handover can therefore be facilitated between a macro base station and femto base station utilising the current capabilities of user equipment and of existing messages between the user equipment and a femto controller/gateway 230.

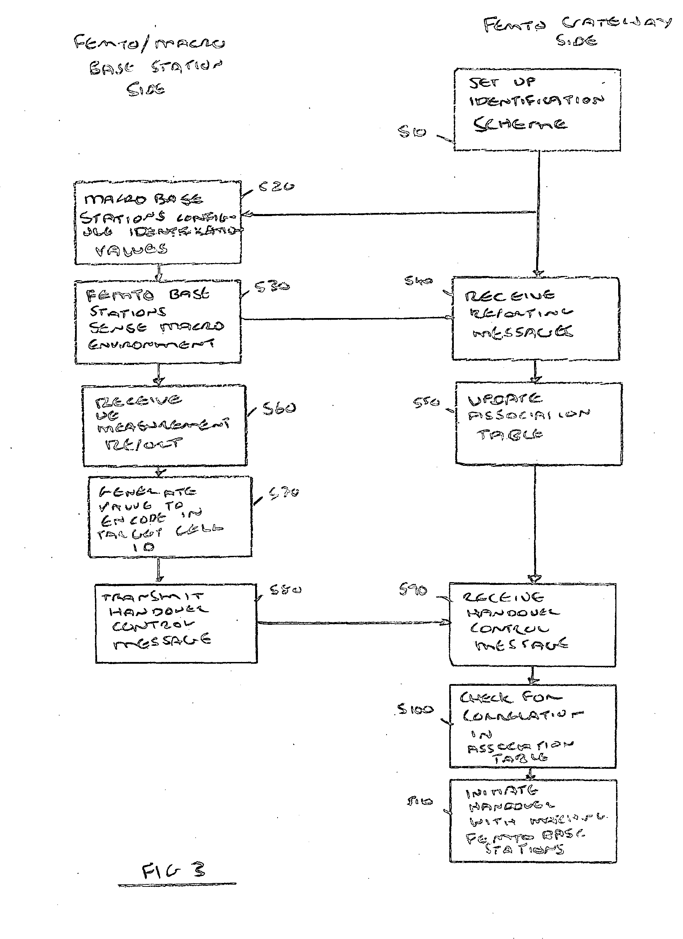

Figure 3 is a flowchart showing the main processing steps of components of the wireless communications network according to one embodiment.

At step S10, the encoding scheme to be used and the associated identifying characteristics are defined and provisioned within the network. For example, in a 3G implementation, as illustrated in Figure 4A, the macro base stations may be provisioned to provide a 4-bit femto primary scrambling code identifier which identifies the primary scrambling code being utilised by a femto base station. The macro base station may then be provisioned to concatenate this with a 9-bit macro base station primary scrambling code identifier representing the scrambling code being used by that macro base station. Further identifiers may be then concatenated using the remaining 3-bit of this 16-bit portion of the information element which is concatenated with a 12-bit radio network controller identifier to form a target cell identifier information element of a source radio network controller to target radio network controller transparent container of a relocation request or a relocation required message. Likewise, in a 2G implementation, as illustrated in Figure 4B, the macro base station may be once again provisioned to provide a 4-bit value representing the primary scrambling code of a femto base station, 3-bits to represent the base station colour code, a further 5-bits to represent the frequency being utilised by that macro base station and 4-bits as a cell identifier bit mask. Alternatively, as illustrated in Figure 4C, the macro base station may be provisioned with a virtual cell identifier which is communicated to the macro base station and the macro base station will append that virtual cell identifier to a 4-bit value identifying the primary scrambling code being utilised by a target femto base station. Whilst these illustrative examples have been shown in Figures 4A to 4C it will be appreciated that various combinations of distinctive characteristics of the macro cell may be utilised. These distinctive characteristics may include parts of, or information representing, the cell ID of the macro cell, the frequency of the macro base station, the primary scrambling code of the macro base station, the base station colour code of the macro base station, the local area code, RAC, PLMN ID of the macro base station or the RNC ID of the macro base station. Various combinations of these elements may be utilised to distinctively characterise the macro base station.

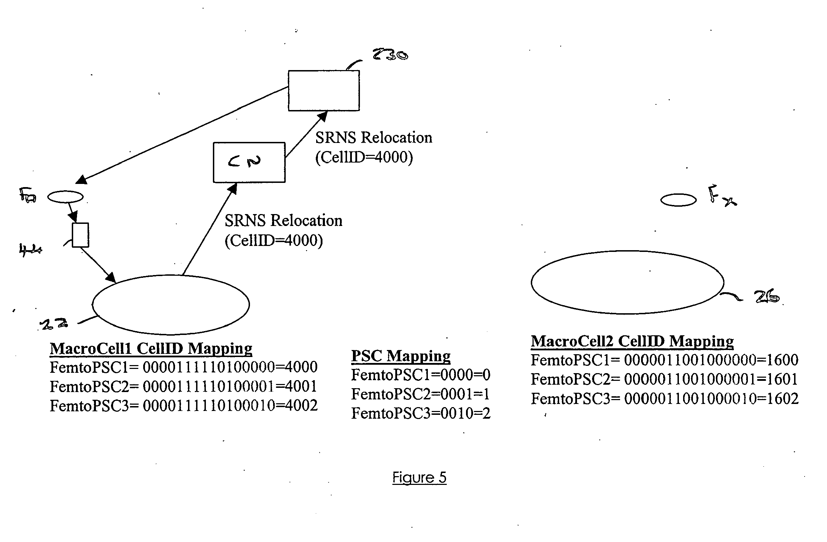

At step S20, the macro base stations receive information indicating the scheme to be used and generate their own mappings. For example, as shown in Figure 5, macro base station 24 generates a mapping scheme whereby the first three most significant bits of the 16-bit identifier are left blank, the next 9-bits are a binary representation of the primary scrambling code of the macro cell, whilst the 4 least significant bits represent the primary scrambling codes expected to be used by femto base stations within that macro cell. A similar arrangement exists for macro base station 26. Hence, if a measurement report is received at macro base station 24 indicating that a target femto base station F_{A} has been identified with a primary scrambling code of "1", then a binary value equivalent to decimal 4000 is generated by the macro base station 24. Likewise, if macro base station 26 receives a measurement report indicating a target femto base station F_{X} also having a primary scrambling code of "1", then it generates a 16-bit binary value having the decimal equivalent of 1600. A similar arrangement could exist if macro cells 1 and 2 had been given virtual cell identifiers and those virtual cell identifiers would have been appended in place of, for example, the 12 most significant bits of the 16-bit value as shown in Figure 4C. Hence, it can be seen that the encoding scheme generates a value identifying characteristics of the macro base station and the femto base station from a measurement report indicating a potential target handover candidate.

At step S30, the femto base stations on initialisation, and generally periodically thereafter, will sense neighbouring macro base stations. It will be appreciated that such sensing functionality may either be provided directly within the femto base station or may be achieved by instructing the user equipment to perform such measurements and provide this information in a measurement report. For example, femto base station F_{A} may sense that it is within the macro cell 24 supported by macro base station 22. Accordingly, the femto base station F_{A} will send a reporting message to the femto controller/gateway 230 identifying its primary scrambling code and the primary scrambling code of the macro base station 22. Of course, if an alternative scheme is being used, then the femto base station will need to measure those other characteristics of the macro base station 22 and provide this in its reporting message.

At step S40, the femto controller/gateway 230 receives these messages from the femto base stations distributed throughout the network.

At step S50, the femto controller/gateway 230 builds up a table and associates each femto base station through a unique identifier with those characteristics. Accordingly, in the example shown in Figure 5, the femto controller/gateway 230 will identify femto base station F_{A} uniquely and will associate a primary scrambling code of "1" with that femto base station and a macro base station primary scrambling code of "250". The femto controller/gateway 230 will then be able to identify possible target handover candidates from this table upon receipt of a relocation request message encoding those characteristics.

Meanwhile, at step S60, the user equipment 44 within the macro cell 24 supported by macro base station 22 identifies that it is receiving an increasingly degraded signal. The user equipment 44 performs a scan of possible handover targets and identifies femto base station F_{A} as a potential candidate. The user equipment 44 measures that the femto base station F_{A} has a primary scrambling code of "1" and provides this in its measurement report to the macro base station 22.

At step S70, the macro base station 22 maps the primary scrambling code "1" and generates a 16-bit binary string having a decimal value of 4000 which encodes both the primary scrambling code of the femto base station F_{A} and the primary scrambling code of the base station 24.

At step S80, the macro base station 22 inserts the generated value into the target cell identifier information element of the source radio network controller to target radio network controller transparent container of a relocation required message. This message is then transmitted to the core network CN. The core network CN then remaps this message into a relocation request message which is transferred, together with the target cell identifier information element still in tact to the femto controller/gateway 230. Hence, information identifying both the target femto base station and the source macro base station is encoded within existing message without needing to change the existing standard or protocol of that message and this information reaches the femto controller/gateway 230 in tact.

At step S90, the femto controller/gateway 230 receives the message and is able to extract the information stored in the target cell identifier. The femto controller/gateway 230 extracts that information and correlates this with the table which associates femto base station and macro base station characteristics with particular femto base station. In this example, the femto controller/gateway 230 only achieves a single match since only femto base station F_{A} has matching characteristics (although femto base station F_{X} has a matching primary scrambling code, it has a different macro base station primary scrambling code).

Accordingly, at step S110, the femto controller/gateway 230 initiates handover with the femto base station F_{A}.

Those femto base stations which utilise a closed access regime (in which only registered user equipment may handover to the femto base station) the femto controller/gateway 230 will be able to narrow the possible candidate femto base stations further bases on the IMSI of the user equipment matching the access control list of each femto base station. In such an arrangement, the femto base stations will also include in their reporting message, sent at step S30, details of those user equipment which are currently registered with that femto base station. When the femto controller/gateway 230 receives the handover control message at step S90 and identifies at step S100 that closed access femto base stations are possible handover candidates, it will also decode the IMSI included in that handover control message and correlate this against the access control list stored for each femto. In this way, it can be seen that the number of potential handover candidates can be vastly reduced.

Hence, it can be seen that the incoming handover request is made to contain information which includes distinctive characteristics of the macro cell and the target femto cell. The femto base station detects macro cell distinctive characteristics and registers the information along with its own characteristics with the femto gateway. When the incoming handover request comes in from the macro network (via the core network) the femto controller/gateway 230 determines the macro cell distinctive characteristics and the femto cell distinctive characteristics from the incoming handover request and determines target femto base stations which have similar characteristics. Through this approach, the list of target femto base stations may be considerably reduced and the frequency of incorrect femto base stations being prepared will also be reduced. In a similar way, the incoming handover message may be made to contain information which contains a unique identifier of the macro cell (through a virtual cell identifier) in addition to the distinctive characteristics of the femto base station. The femto base station registers its distinctive characteristics with the femto gateway.

In a more centralised arrangement, the femto controller/gateway 230 provisions virtual cell identifiers and determines, based on geographical information provided by femto base stations, those femto base stations residing within each macro cell. When the incoming handover request comes in from the macro network (via the core network CN), the femto controller/gateway 230 determines the virtual cell identification and the femto cell distinctive characteristics and determines the target femto base stations which have similar characteristics.

As mentioned above, and as shown in Figure 5, macro base station 22 and macro base station 26 have femto base station F_{A} and F_{X} using the same primary scrambling code "1" (PSC 1) and the user equipment 44 is able to access both femto base stations. The macro cell mapping not only reflects the primary scrambling code of the femto base station but also the primary scrambling code of the macro base station (as shown in Figure 4A), where the first 4 least significant bits relate the femto base station primary scrambling code and the next 9 most significant bits represent the primary scrambling code of the macro base station. The femto base stations F_{A} and F_{X} will, through network listening, detect the primary scrambling codes of the associated macro base stations and pass this detected information to the femto controller/gateway 230. Femto base station F_{A} registers a macro primary scrambling code of "250" and its own primary scrambling code of "1". The femto base station F_{X} registers a macro primary scrambling code of "100" and its own primary scrambling code of "1". The user equipment 44 is in the macro cell associated with macro base station 22 and sends a handover trigger showing that femto base station F_{A} is strong. The macro network sends a relocation request message to the core network CN with a cell ID of "4000". The femto controller/gateway 230 receives the relocation request message from the core network CN with the cell ID of 400. The femto controller/gateway 230 maps this back to the femto base station F_{A} using the primary scrambling code of the femto base station and the macro cell. Accordingly, no match occurs for the femto base station F_{X} and only the femto base station F_{A} is prepared for handover.

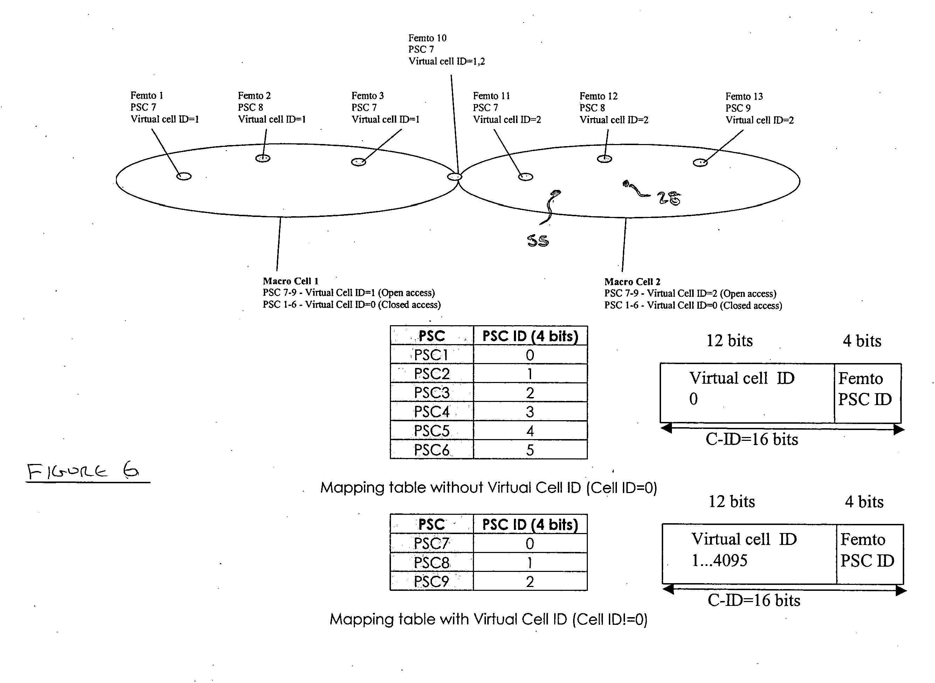

The use of virtual cell identifiers is shown in more detail in Figure 6. All of the femto base stations register their primary scrambling code and provisioned virtual cell identifier with the femto controller/gateway 230. User equipment 55 in macro cell 2 triggers a measurement report and reports a primary scrambling code of "7". The user equipment 55 is located close to femto base station 11. Macro base station 28 maps a primary scrambling code of "7" to a virtual cell identifier of "2" indicating an open access femto base station. Hence, a primary scrambling code identifier of "0" is encoded together with the virtual cell identifier of "2" as per Figure 4C. The femto controller/gateway 230 receives the information in the relocation of request. The femto controller/gateway 230 maps this information to femto base stations 10 and 11 from its association table and has only 2 target femto base stations to prepare for handover. Without the virtual cell identifier, the femto controller/gateway 230 would have also incorrectly matched femto base stations 1 and 3 in macro cell 1.

It is possible to allocate particular meanings to ranges of primary scrambling codes for certain virtual cell IDs and these may be reserved for femto base stations having, for example, closed access. Hence, in the arrangement shown in Figure 6, the primary scrambling codes "1" to "6" are reserved for closed access femto base stations and these are allocated a virtual cell ID of "0", which is used throughout the network because it is possible to reduce the incidence of false preparation through use of the user equipment's IMSI and the femto base stations access control list. Therefore, only those which are open access need to be provided with a virtual cell identifier for the macro cell.

Accordingly, it can be seen that the issues related to macro base station to femto base station handover can be solved without requiring any standards or protocol changes. In an example network of 100 base stations with 1000 open access femto base stations and 6 femto primary scrambling codes for the open access base stations, using a basic approach would mean each handover trigger would map to approximately 170 femto base stations being prepared. Using the above-mentioned technique, typically only 2 femto base stations would be prepared. Accordingly, the number of false preparations and attempted re locations of user equipment in a closed access mode will be considerably reduced.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of encoding information in a handover control message to facilitate handover of user equipment between a macro base station and a femto base station of a wireless communications network, said method comprising the steps of:
predefining handover identifier values to be utilised by said macro base station when generating said handover control message, each handover identifier value encoding an identifying characteristic of a femto base station within a macro cell supported by said macro base station and encoding an identifying characteristic of said macro base station;
in response to a measurement report message received at said macro base station indicating a measured identifying characteristic of a target femto base station identified by said user equipment as a handover candidate, identifying a corresponding handover identifier value encoding said measured identifying characteristic of said target femto base station; and
utilising said corresponding handover identifier value within a target cell identifier information element of said handover control message.

2. The method of claim 1, wherein said target cell identifier information element comprises an 'n'-bit number, said radio network controller identifier portion comprises an 'm'-bit number and said cell identifier portion comprises 'p'-bits allocated for said identifying characteristic of said femto base station concatenated with 'q'-bits allocated for identifying characteristic of said macro base station, where 'p' + 'q' + 'm' is less than or equal to 'n'.

3. The method of claim 1 or 2, wherein said identifying characteristic of said macro base station comprise at least one of an indication of a macro cell identifier, an indication of macro cell frequency and an indication of a macro base station colour code.

4. The method of any preceding claim, wherein said identifying characteristic of said macro base station comprises a macro primary scrambling code indicator.

5. The method of any preceding claim, wherein said identifying characteristic of said macro base station comprises a virtual cell identifier associated with that macro base station.

6. The method of claim 5, wherein a first set of virtual cell identifiers indicates that said target femto base station is an open access femto base station and a second set of at least one virtual cell identifier indicates that said target femto base station is a closed access femto base station.

7. The method of any preceding claim, wherein said identifying characteristic of said femto base station comprises a femto primary scrambling code identifier.

8. The method of claim 7, wherein a first set of said femto primary scrambling code identifiers indicates that said target femto base station is an open access femto base station and a second set of said femto primary scrambling code identifiers indicates that said target femto base station is a closed access femto base station.

9. The method of any preceding claim, comprising the step of including a user equipment identifier in said handover control message.

10. The method of any preceding claim, wherein said target cell identifier information element is provided within a source radio network controller to target radio network controller transparent container of said handover control message.

11. A macro base station operable to encode information in a handover control message to facilitate handover of user equipment between said macro base station and a femto base station of a wireless communications network, said macro base station comprising:
storage operable to store predefined handover identifier values to be utilised when generating said handover control message, each handover identifier value encoding an identifying characteristic of a femto base station within a macro cell supported by said macro base station and encoding an identifying characteristic of said macro base station;
identifying logic operable, in response to a measurement report message received indicating a measured identifying characteristic of a target femto base station identified by said user equipment as a handover candidate, to identify a corresponding handover identifier value encoding said measured identifying characteristic of said target femto base station; and
message generation logic operable to utilise said corresponding handover identifier value within a target cell identifier information element of said handover control message.

12. A method of decoding information in a handover control message to facilitate handover of user equipment between a macro base station and a femto base station of a wireless communications network, said method comprising the steps of:
associating a femto base station identifier with an identifying characteristic of a femto base station within a macro cell and an identifying characteristic of a macro base station supporting said macro cell;
receiving a handover identifier value within a target cell identifier information element of said handover control message, said handover identifier value encoding an identifying characteristic of a femto base station within a macro cell supported by a macro base station and an identifying characteristic of that macro base station;
initiating handover with those femto base stations whose identifier is associated with said identifying characteristic of said femto base station and said identifying characteristic of said macro base station encoded within said handover identifier value.

13. The method of claim 12, wherein said step of associating comprises:
associating said femto base station identifier with said identifying characteristic of said femto base station within more than one macro cell and an identifying characteristic of a macro base station supporting those macro cells.

14. The method of claim 12 or 13, wherein said step of associating comprises:
associating said femto base station identifier with said identifying characteristics in response to a reporting message from that femto base station including said identifying characteristics.

15. A femto gateway operable to decode information in a handover control message to facilitate handover of user equipment between a macro base station and a femto base station of a wireless communications network, said femto gateway comprising:
storage logic operable to associate a femto base station identifier with an identifying characteristic of a femto base station within a macro cell and an identifying characteristic of a macro base station supporting said macro cell;
reception logic operable to receive a handover identifier value within a target cell identifier information element of said handover control message, said handover identifier value encoding an identifying characteristic of a femto base station within a macro cell supported by a macro base station and an identifying characteristic of that macro base station;
handover initiation logic operable to initiate handover with those femto base stations whose identifier is associated with said identifying characteristic of said femto base station and said identifying characteristic of said macro base station encoded within said handover identifier value.

## Amended claims

### Amended claims in accordance with Rule 137(2) EPC.

**1.** A method of encoding information in a handover control message to facilitate handover of user equipment (44; 55) between a macro base station (22; 28) and a femto base station (F_{A}; F_{B}; F_{C}) of a wireless communications network (10), said method comprising the steps of:
predefining (S20) handover identifier values to be utilised by said macro base station when generating said handover control message, each handover identifier value encoding both an identifying characteristic of a femto base station within a macro cell (24) supported by said macro base station and an identifying characteristic of said macro base station;
in response to a measurement report message received at said macro base station indicating a measured identifying characteristic of a target femto base station identified by said user equipment as a handover candidate, identifying, (S60, S70) a corresponding handover identifier value encoding both said measured identifying characteristic of said target femto base station and said identifying characteristic of said macro base station; and
utilising said corresponding handover identifier value within a target cell identifier information element provided within a source radio network controller to target radio network controller transparent container of said handover control message, wherein said target cell identifier information element comprises an 'n'-bit number, a radio network controller identifier portion comprises an 'm'-bit number and a cell identifier portion comprises 'p'-bits allocated for said identifying characteristic of said femto base station concatenated with 'q'-bits allocated for identifying characteristic of said macro base station encoded by said handover identifier value, where 'p' + 'q' + 'm' is less than or equal to 'n'.

**2.** The method of claim 1, wherein said identifying characteristic of said macro base station comprise at least one of an indication of a macro cell identifier, an indication of macro cell frequency and an indication of a macro base station colour code.

**3.** The method of any preceding claim, wherein said identifying characteristic of said macro base station comprises a macro primary scrambling code indicator.

**4.** The method of any preceding claim, wherein said identifying characteristic of said macro base station comprises a virtual cell identifier associated with that macro base station.

**5.** The method of claim 4, wherein a first set of virtual cell identifiers indicates that said target femto base station is an open access femto base station and a second set of at least one virtual cell identifier indicates that said target femto base station is a closed access femto base station.

**6.** The method of any preceding claim, wherein said identifying characteristic of said femto base station comprises a femto primary scrambling code identifier.

**7.** The method of claim 6, wherein a first set of said femto primary scrambling code identifiers indicates that said target femto base station is an open access femto base station and a second set of said femto primary scrambling code identifiers indicates that said target femto base station is a closed access femto base station.

**8.** The method of any preceding claim, comprising the step of including a user equipment identifier in said handover control message.

**9.** A macro base station (22; 28) operable to encode information in a handover control message to facilitate handover of user equipment (44; 55) between said macro base station and a femto base station (F_{A}; F_{B}; F_{C}) of a wireless communications network (10), said macro base station comprising:
storage operable to store predefined handover identifier values to be utilised when generating said handover control message, each handover identifier value encoding both an identifying characteristic of a femto base station within a macro cell (24) supported by said macro base station and an identifying characteristic of said macro base station;
identifying logic operable, in response to a measurement report message received indicating a measured identifying characteristic of a target femto base station identified by said user equipment as a handover candidate, to identify a corresponding handover identifier value encoding both said measured identifying characteristic of said target femto base station and said identifying characteristic of said macro base station; and
message generation logic operable to utilise said corresponding handover identifier value within a target cell identifier information element provided within a source radio network controller to target radio network controller transparent container of said handover control message, wherein said target cell identifier information element comprises an 'n'-bit number, a radio network controller identifier portion comprises an 'm'-bit number and a cell identifier portion comprises 'p'-bits allocated for said identifying characteristic of said femto base station concatenated with 'q'-bits allocated for identifying characteristic of said macro base station encoded by said handover identifier value, where 'p' + 'q' + 'm' is less than or equal to 'n'.

**10.** A method of decoding information in a handover control message to facilitate handover of user equipment (44; 55) between a macro base station (22; 28) and a femto base station (F_{A}; F_{B}; F_{C}) of a wireless communications network (10), said method comprising the steps of:
associating (S10, S40, S50) a femto base station identifier with an identifying characteristic of a femto base station within a macro cell (24) and an identifying characteristic of a macro base station supporting said macro cell;
receiving (S90) a handover identifier value within a target cell identifier information element provided within a source radio network controller to target radio network controller transparent container of said handover control message, wherein said target cell identifier information element comprises an 'n'-bit number, a radio network controller identifier portion comprises an 'm'-bit number and a cell identifier portion comprises 'p'-bits allocated for said identifying characteristic of said femto base station concatenated with 'q'-bits allocated for identifying characteristic of said macro base station encoded by said handover identifier value, where 'p' + 'q' + 'm' is less than or equal to 'n', said handover identifier value encoding both an identifying characteristic of a femto base station within a macro cell supported by a macro base station and an identifying characteristic of that macro base station;
initiating (S110) handover with those femto base stations whose identifier is associated with said identifying characteristic of said femto base station and said identifying characteristic of said macro base station encoded within said handover identifier value.

**11.** The method of claim 10, wherein said step of associating comprises:
associating said femto base station identifier with said identifying characteristic of said femto base station within more than one macro cell and an identifying characteristic of a macro base station supporting those macro cells.

**12.** The method of claim 10 or 11, wherein said step of associating comprises:
associating said femto base station identifier with said identifying characteristics in response to a reporting message from that femto base station including said identifying characteristics.

**13.** A femto gateway (230) operable to decode information in a handover control message to facilitate handover of user equipment (44; 55) between a macro base station (22; 28) and a femto base station (F_{A}; F_{B}; F_{C}) of a wireless communications network (10), said femto gateway comprising:
storage logic operable to associate a femto base station identifier with an identifying characteristic of a femto base station within a macro cell (24) and an identifying characteristic of a macro base station supporting said macro cell;
reception logic operable to receive a handover identifier value within a target cell identifier information element provided within a source radio network controller to target radio network controller transparent container of said handover control message, wherein said target cell identifier information element comprises an 'n'-bit number, a radio network controller identifier portion comprises an 'm'-bit number and a cell identifier portion comprises 'p'-bits allocated for said identifying characteristic of said femto base station concatenated with 'q'-bits allocated for identifying characteristic of said macro base station encoded by said handover identifier value, where 'p' + 'q' + 'm' is less than or equal to 'n', said handover identifier value encoding both an identifying characteristic of a femto base station within a macro cell supported by a macro base station and an identifying characteristic of that macro base station;
handover initiation logic operable to initiate handover with those femto base stations whose identifier is associated with said identifying characteristic of said femto base station and said identifying characteristic of said macro base station encoded within said handover identifier value.

**14.** A computer program product operable, when executed on a computer, to perform the method steps of any one of claims 1 to 8 to 10 to 12.
